# EUROPEAN PATENT SPECIFICATION

(11) **EP 2 992 757 B1**
(45) Date of publication and mention of the grant of the patent: **14.12.2016**
(21) Application number: 14382330.0
(22) Date of filing: 04.09.2014
(51) Int. Cl.: A01K 11/00, A01K 29/00, G08B 13/14, G08B 13/24

(54) **Method and system for monitoring and detecting attacks on wild animals**
Verfahren und System zur Überwachung und Detektion von Angriffen auf Wildtiere
Procédé et système pour superviser et détecter des attaques sur des animaux sauvages

(43) Date of publication of application: 09.03.2016
(73) Proprietor: Fractalia Remote Systems, S.L., 28023 Madrid (ES)
(72) Inventor: Fernandez Riba, Alejandro, 28023 MADRID (ES); De Prat, Jose, Luis, 28023 MADRID (ES); Iborra Ruano, Victor, 28023 MADRID (ES)
(74) Representative: Carpintero Lopez, Francisco

(56) References cited:
- DE-A1-102008 006 044
- DE-U1-202012 010 171
- US-A1- 2007 008 155
- US-A1- 2013 285 815

## Description

### Technical Field of the Invention

The present invention relates to the field of animal protection, and more specifically to a method and system for detecting attacks on animals, particularly poacher attacks on wild animals, to remove parts of their body.

### Background of the Invention

Despite being an illegal practice with severe punishments, poacher attacks on wild animals commonly occur in different parts of the world. Attacking wild animals to quarter them and remove particularly valuable body parts is particularly common. For instance, rhinoceros horns, elephant tusks, lion teeth or heads, gorilla limbs or heads and other body parts of certain animals, are in high demand in certain countries (particularly in East Asia) and fetch very high prices on the illegal market. In this manner, rhinoceros horn trafficking moves about 6000 M € a year today, and as much as 200k $ are being paid for a single horn at its point of origin.

Naturally, although the objective of animal hunting is not to cause the death of said animal but to remove some of its parts, this practice leads to the death of the animal in most cases not due to the act of removal but due to the fact that the animals are seriously injured and are not located and tended to for a long time. That is particularly serious given that in most cases these are wild animals in danger of extinction.

In recent years, rhinoceros hunting has increased dramatically, particularly in South Africa, home of 75% of the world's rhinoceros population. The killing is being orchestrated by organized groups trading horns on the Chinese and Southeast Asian markets. Last year, 1004 rhinoceros died in South Africa at the hands of poachers, which is surprisingly 7,700% more than in 2007, when 13 rhinoceros were attacked. Unfortunately, the poaching rate starting this year up until now shows no sign of dropping. In fact, although there are about 25,000 specimens in Africa today, if poaching continues at the current rate, wild rhinoceros will disappear in about 15 years. Something similar is happening with elephants, since it is estimated that poachers attack one elephant every 15 minutes in Africa.

Given the dimensions of the problem, different solutions have been implemented to try to eradicate this practice, such as for example:
- Militarized response teams available in almost all areas of Africa where said animals are under threat
- Drones (also referred to as UAS - unmanned aircraft systems) provided with an image capturing camera to monitor the site or enclosure of nature reserves.
- Poisoning rhinoceros horns, theoretically preventing subsequent consumption by humans.
- GPS collars for locating the animals

US2013/285815 A1 discloses an animal tracking system for remotely monitoring animal positioning. The system includes an implant device, a global positioning system, a network, one or more remote servers, and at least one wireless computing device. The implant device acts as a GPS receiver, calculating the animal's position and then transmitting the results to the remote server where they are stored in a database. Owners can remotely access the database via a software application installed on a wireless computing device. Users can select an acceptable roaming range for the animal, an acceptable range between the animal and other animals being tracked, a lack of movement, or substantial changes in body temperature. Additionally, the implant device can directly connect with the wireless computing device via a Bluetooth connection.

DE102008006044 A1 discloses a monitoring device fixed to or built in an object of a human or an animal. The monitoring device includes a transceiver to wirelessly transmit excitation signals to a transponder and wirelessly receive response signals from the transponder. The monitoring device includes an alarm device that is designed to set off an alarm e.g. vibration alarm, when an excepted response signal fails to occur or exhibits signal strength below a preset signal strength value, so as to signalize a loss of the object to be monitored.

US2007/008155 A1 discloses a a method for identifying an entity comprising placing an internal tag within the entity and placing an external tag proximate the entity wherein the internal tag and external tag are coupled.

DE202012010171 U1 discloses an animal monitoring device for a farm animal, comprising: - means disposed in a first housing detection unit for positioning on or in the body of a domestic animal with a sensor for detecting a first body value of the domestic animal and a short-range transmitter for the wireless transmission of the first body value.

However, these solutions do not achieve the desired objective since, as can be seen in the figures indicated above, the number of dead rhinoceros continues to increase. The poisoning technique has been shown to be ineffective as a deterrent because it is taken in small amounts, and monitoring using drones or militarized response teams does not allow detecting the attack in a short time period since the nature reserves and/or parks can extend over massive stretches of land (the size of Portugal, for example). This late detection means that it is impossible to capture the attacking poachers or to tend to the injured animal on time so that it survives. For that reason, speed in detecting and locating the attack is crucial in these scenarios. The use of collars in animals leads to rejection among park visitors (the main source of income for park maintenance) as they can be seen from a distance, and furthermore the collar only allows locating the animal but not detecting cases of attacks on said animal.

There is, therefore, a need for a system which allows detecting and locating an attack on an animal for removing a specific body part (rhinoceros horn or elephant tusks, for example) in the shortest time and with the greatest accuracy possible in order to make capturing traffickers and tending to the injured animal easier. The foregoing and other advantages of the invention will be apparent in view of the detailed description of the invention.

### Brief Description of the Invention

The objective of the present invention is to develop a method and system which allows locating and notifying about attacks on animals. The system comprises of two types of devices which will be implanted in the animal to be monitored. It comprises a device (member device) that will be introduced in the part of the animal removal of which is to be controlled (rhinoceros horn or elephant tusk, for example), this part is called member or piece, and another device (body device) inserted in the animal's body (in rhinoceros or elephant hump or any other part of the animal body, for example). The member device will send wireless (radio frequency) signals to the body device; depending on the embodiment, these signals can be sent as a response to signals received from the body device (also referred to as interrogation signals) or can be sent periodically by the member device "motu proprio", i.e., without previously receiving an interrogation signal from the body device. As will be explained below, in one embodiment when the member device does not receive a signal from the body device (either the confirmation signal or an interrogation signal) for a certain time (which will indicate that the member has been removed), the member device emits signals with a shorter period than the sampling period or with more power than usual to make detection by ground beacons easier. The body device will monitor that the member device (and therefore also the member itself) is within a specific radius (less than 2 meters, for example; this radius will be set depending on animal sizes). If the body device does not detect the member device, it will emit an alarm by means of radio (for example, by means of GSM/GPRS communications, UHF/VHF communications, satellite communications, WiFi communications or any other wireless communication network) to a remote control/alarm unit (where there is usually a server that will receive and process said alarm). The position, which is usually obtained with a GPS device included in the body device of the animal, will be included in that same alarm or in an immediately following message.

The present invention will provide the following advantages among others:
- It will allow notifying response teams almost immediately when attack and separation of the member occurs, informing about the location of the site where the animal was attacked. In other words, the response teams (military, rangers, forest rangers, drones...) will be notified with almost real-time, rapid and accurate information, which will allow catching poachers in the middle of the attack or a very short time after, in addition to being able to take care of the injured animal as soon as possible.
- These devices are small, concealed and discrete, with implantation by means of veterinary surgery which allows easily implanting and concealing them from poachers, in addition to assuring their durability and assuring that they do not easily deteriorate or become lost (as may occur if they are not implanted in the body but in a complement that is placed on the animal, such as a collar). The devices can be encapsulated in biocompatible silicone, for example, for easy implantation.

- Furthermore, its small size will mean that it does not change the appearance of wild animals for nature park visitors, since visitors are the source of income for these parks and animals wearing a visible electronic device (a GPS collar, for example) would deter visitors.
- The low-cost and low-complexity components of the system are easy-to-use, easy-to-handle and mechanically robust since the device must withstand the living habits of the animals to be monitored.
- Battery consumption will also be the lowest and most efficient possible so the duration of the activity thereof without having to change the batteries is the longest possible (changing the battery will involve capturing the animal and performing a surgical intervention so it is important to minimize the number of changes).

In a first aspect, the present invention proposes a method for monitoring and detecting attacks on animals, where the method comprises the following steps:
- determining the existence of an alarm situation in the animal using a first electronic device implanted in the animal's body;
- when the existence of an alarm situation is determined, performing the following steps using the first electronic device:
   - sending an alarm message to an alarm unit external to the animal through a wireless communication network by means of a communications module in the first electronic device;
   - obtaining the location of the device by means of a positioning module in the first electronic device; and
   - sending a message including said location through the wireless communication network.

The step of determining the existence of an alarm situation in the animal can include:
- determining the existence of an alarm situation when the first electronic device does not receive a radio frequency signal from a second electronic device implanted in a body part of the animal (removal of which is to be controlled and detected; the animal may be a rhinoceros, for example, and the second device may be implanted in the rhinoceros horn) for a time period greater than a specific time threshold.

This second electronic device can periodically send a radio frequency signal or emit a radio frequency signal as a response to a periodic signal received from the first device (this signal is referred to as an interrogation signal). The signal emitted by the second device may include the animal's identification.

In one embodiment, the method further includes:
- a radio frequency beacon receiving the signal sent by the second device; and
- the radio frequency beacon sending a message informing that the signal has been received from the device, including the identification of the device the signal of which has been received;
- estimating the location of the second device using the information sent by the beacon and the position of said beacon.

To make this locating easier, even when the body part where the second device is located has been removed, the method further includes:
- the second device increasing the power and/or periodicity of the signals it emits when the second device does not receive any signal from the first device for a certain time interval. Furthermore, if previously the second device only emitted signals when it received a signal from the first device, when it does not receive signals for a certain time the second device starts to emit signals periodically (without having to first receive an interrogation signal from the first device).

In one embodiment, the positioning module used by the first device for obtaining location (a GPS module, for example) and the communications module used for communicating with the alarm unit are deactivated when the existence of an alarm situation has not been determined, and when the existence of an alarm situation is determined, the method includes the following steps prior to the steps of sending an alarm message and obtaining the location:
- activating the positioning module in the first electronic device;
- activating the communications module in the first electronic device;
- enabling communications through the wireless communications network by means of the communications module.

The location of the first device can be included in the alarm message or in a message other than the alarm message. In turn, the alarm message can include the animal's identification.

The steps of obtaining and sending the location of the device once the existence of an alarm situation is determined can be repeated until the battery of the first device runs out.

The message including the location can also be sent to the alarm unit (and this unit makes said message available to a response team) or the message including the location can be sent directly by the first device to a server that can be accessed by the response team to obtain said location (over the Internet, for example).

When the alarm unit receives the alarm message, it can send an alarm message to a response team.

In one embodiment, the first device can determine the existence of an alarm situation in the animal when it detects nearby moving metal objects (vehicles, weapons...) or when certain physiological functions of the animal it monitors (heart beat, temperature) are outside a specific range of values; as a result, an alarm will be determined when the animal may be in a dangerous situation because of the presence of hunters in its proximity or because he is sick or injured.

In a second aspect, the present invention proposes a system for monitoring and detecting attacks on animals, where the system comprises:
- a first electronic device implanted in the animal's body;
- a second electronic device implanted in a body part of the animal removal of which is to be detected, comprising a radio frequency module configured for sending radio frequency signals to the first electronic device (which may be a response to signals received from same);
- where the first electronic device comprises:
   - a radio frequency module configured for receiving radio frequency signals from the second electronic device (in one embodiment, this module will also be configured for sending periodic interrogation signals to the second device);
   - a first communications module configured for communicating the first electronic device with at least one alarm unit external to the animal through a first wireless communications network;
   - a positioning module configured for obtaining the location of the first electronic device;
   - a processor configured for determining the existence of an alarm situation when the first electronic device does not receive a radio frequency signal from the second electronic device for a time period greater than a specific time threshold and, when the existence of an alarm situation is determined, for performing the following steps using the first electronic device:
      - sending an alarm message to the alarm unit through the first wireless communication network by means of the first communications module;
      - obtaining the location of the device by means of the positioning module;
      - sending a message including said location through the first wireless communication network by means of the first communications module.

Said positioning module and said first communications module can be deactivated when the existence of an alarm situation has not been determined, and the processor will additionally be configured for activating said modules when the existence of an alarm situation is determined.

In one embodiment, the first device has a second communications module configured for communicating the first electronic device with at least the alarm unit through a second wireless communications networks, and wherein the processor is additionally configured for activating and using this second communications module if the first communications module informs the processor that it cannot communicate through the first wireless network.

The first wireless communication network can be at least one of the following: a GSM/GPRS network, a GSM network, a UHF/VHF network, a 3G mobile telephony network, a 4G mobile telephony network, an LTE mobile telephony network, a satellite communications network or a WiFi network, or any other wireless communication network.

Finally, the present invention proposes a computer program comprising instructions that can be run by a computer to implement the described method when run in a computer, a digital signal processor, an application-specific integrated circuit, a microprocessor, a microcontroller or any other form of programmable hardware. Said instructions can be stored in a digital data storage medium.

The following specification and attached drawings can be referred to in order to more fully understand the foregoing and other aspects, objects and advantages of the invention.

### Description of the Drawings

To complement the description that is being made and for the purpose of aiding to better understand the features of the invention according to several preferred practical embodiments thereof, a set of drawings is attached as an integral part of this description in which the following is depicted with an illustrative and non-limiting character:
Figure 1 schematically shows the system for monitoring and detecting attacks on animals and the operation of said system according to an embodiment of the invention.
Figure 2 shows a block diagram depicting the different components or modules of the devices used in the system for monitoring and detecting according to an embodiment of the invention.

### Detailed Description of the Invention

The present invention proposes a method and system for monitoring and detecting attacks on animals involving the removal of a body part of the animal.

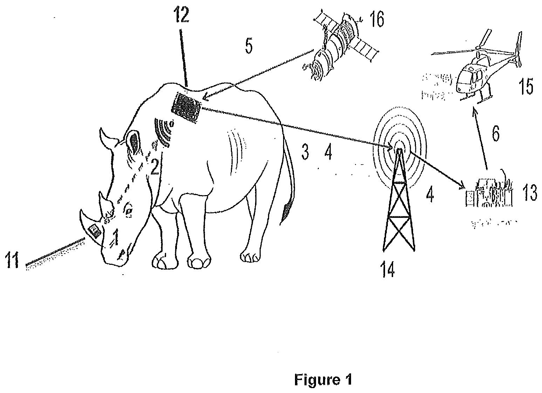

Figure 1 schematically shows the different parts of the system. There are two wireless communication devices, one device (11, member device) installed in the member (part) of the animal removal of which is to be detected (rhinoceros horn, for example) and another device (12, body device) installed in the animal's body, for example, in a rhinoceros hump, in the back of the animal...). The devices can communicate with one another using any type of radio frequency system (usually a short-range radio frequency system).

Under normal circumstances, these devices will be separated a specific fixed distance that is however programmable according to the physiological characteristics or size of the animal to be monitored. So when the body device detects that the member device is located beyond a threshold distance (which will indicate that the member in which the member device is located has been removed), the body device sends an alarm message to a control node or server (which will notify emergency/response teams) until it receives an alarm stop signal or until the battery runs out. This threshold distance can be easily adjusted (by changing the reception sensitivity of the body device or the power emitted by the member device, for example) and will depend on the size of the animal, for example it can be 2 meters in rhinoceros while it should be greater (almost double) in elephants.

As can be seen, the devices will not be activated continuously (they will only be activated to detect the electromagnetic presence of another device or when an attack occurs; they can be switched off or in a stand-by position the rest of the time), which will mean that battery consumption is minimum, prolonging the use thereof.

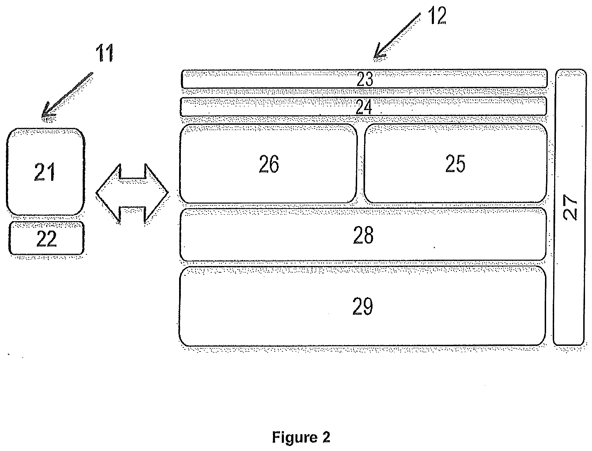

Figure 2 shows a block diagram depicting the different components of the devices used according to an embodiment of the invention. In Figure 2, the different elements or functions of the devices are shown in different isolated blocks, but this is a schematic depiction provided solely for the sake of clarity in explaining the different functions and elements of each device. The different functions and elements can be grouped together in other ways, and elements or functions shown in different modules in Figure 2 can be part of the same module and vice versa.

The member device or unit (11) can be any device (a chip or microchip, for example) that allows emitting (and preferably also receiving) radio frequency signals. In one embodiment, this device can be simply a wireless (radio frequency) transmitter/receiver, for example, a transceiver (21) powered by a battery (22). The body device and member device can communicate with one another using any radio frequency technology, such as NFC (Near Field Communication) technology, ZeegBee technology, Low Pan (Low power Wireless Personal Area Network) technology, 6LowPan (Ipv6 Lowpan) technology or any another type of technology that allows establishing wireless communication.

The device or unit in the body (12) must be a little more complex since it has more functions. Therefore, this device can have:
- A radio frequency transmitter/receiver (23) that allows it to communicate with the member device.
- A module with one or several antennas (24) (also referred to as antenna layer) which will be used by the rest of the modules to communicate (emit/receive signals) with the member device, with the remote server (control unit) and with the GPS.
- A positioning module (25) for obtaining the location of the device when an alarm is produced due to an attack. The positioning system used can be GPS or any other known positioning system.
- A remote communication module (26) for communicating the device with the control unit (also referred to as alarm unit, station or post), for sending an alarm to said unit if the removal of the member is detected. This communication can be by mobile telephony (GSM/GPRS, 3G, UMTS, 4G, LTE...), UHF/VHF, satellite, WiFi or any other wireless communication network. In fact, in one embodiment the module can communicate by means of two different technologies: GSM/GPRS mobile telephony and UHF/VHF radio (using radio technology, for example, when mobile telephony communication is not possible because there is no coverage, for example).
- Although it is not explicitly shown in the drawing, the device will naturally also have a communication module for receiving radio frequency signals emitted by the member device.
- Power supply module (29) with one or more batteries, for example.
- In addition, the device can have one or more control modules or processors encompassing processing, control and coordination functions of the device (of its different modules) both from the electronic/hardware (28) viewpoint and from the software (27) viewpoint.

The system must be simple and mechanically robust to withstand the living habits of the animal. Furthermore, as described above the devices must be small and minimally intrusive, such that they allow the system to go undetected, to not bother the animal and to be easily implantable.

For example, the dimensions of the member device can range between 24 and 30 mm high and between 12 and 16 mm wide, and the body device can be 75 mm high and 42 mm wide (these measurements are only provided by way of example; the devices can of course have other sizes as long as they meet the objective of going undetected, not bothering the animal and being easily implantable).

Although the size will be limited by the batteries that must be used (which are usually non-rechargeable, although in some embodiments said batteries can be chargeable). A typical 1000 mAh battery size is 25.2 mm high and 14.7 mm wide, although smaller and more efficient (longer lasting) batteries are constantly being developed, so the size of the batteries (and of the device) can be reduced. It must be taken into account that the body device usually has two batteries since one is associated with communication with the device in the horn and the second one is intended for communications with the central server and for the GPS sensor.

The devices must be powered by means of batteries with the greatest autonomy possible (batteries lasting as long as possible without having to replace or recharge them), maintaining the minimum size requirement. As will be explained below, periodic communication occurs between the two devices to check that said devices are located within the allowed distance (otherwise an alarm would be emitted), and this communication of course involves consuming battery energy. For this reason, the life of the batteries used in the devices will largely depend on the frequency of this periodic communication (also referred to as sampling frequency or ping frequency).

Table 1 shows the estimated battery life according to the communication period (also referred to as sampling period) between devices in a specific embodiment (using a 1000 mAH battery in the member device). Naturally, the longer the sampling period (lower frequency) the lower the number of communications between the devices, the less the energy consumption and therefore the longer the battery life (and therefore the greater the device autonomy).

**Table 1**

| Communication Period | Battery Life |
|---|---|
| 5 seconds | 4 months |
| 7.5 seconds | 6 months |
| 30 seconds | 2 years |
| 60 seconds | 4 years |
| 120 seconds | More than 8 years |

Extended device autonomy is important since changing or recharging the battery of the devices will involve capturing the animal and even performing a surgical intervention so it is important to minimize the number of changes/recharges.

However, a longer communications period obviously has drawbacks since it means that the time it will take for the body device to realize that that the member device has been separated more than the allowed distance (the member has been removed) is greater, and therefore reaction time in light of an attack will be longer. So it is necessary to reach a balance between reaction time and device autonomy. For example, a communication period of 40-60 seconds between the devices will allow having battery autonomy of 3-4 years.

The results shown in Table 1 can be improved by using batteries having a greater capacity (but they are still small), by using radio frequency devices that consume less energy or by using batteries that can be recharged without having to connect them to the power grid (for example, by means of kinetic energy, solar energy, thermal energy...)

The operation of the system is the following (Figure 1 shows the different steps of the operation):

The device coupled in the member of the animal (a rhinoceros horn, for example) emits a radio signal (1) every certain period (referred to as sampling period) at a specific radio frequency (which can be the same at all times or vary with a predetermined pattern). This signal can be a frame including device identification. This identification must univocally identify the member device of a specific animal with respect to the devices of other animals, which allows the system to work correctly even when there are several animals together, since the body device will know the identification of the member device that it is controlling and will only control reception of signals coming from said device.

In one embodiment, the member device emits the signal as a response to a periodic signal (referred to as interrogation signal) previously sent from the body device (which can include an identification of the member device). In other words, there are two possible embodiments, i.e., the member device periodically sends a signal to the body device without having to first receive a signal from the body device, or the member device sends a signal to the body device as a response to a periodic signal emitted by the body device. Choosing one embodiment or the other is a system design option (it will depend on the devices used, scenario, power to be consumed...), but in either of the two cases, the body device receives a signal coming from the member device periodically (either because the member device is configured for emitting said signal, i.e., first embodiment, or because it is the response to the periodic signal emitted by the body device, i.e., second embodiment).

This period will be chosen according to the desired system performance, depending on the particular application scenario. Therefore, in a scenario in which high device autonomy is required a longer period will be chosen, whereas in scenarios where immediate detection of the attack on the animal is critical a shorter sampling period will be chosen. Generally, since both aspects are desirable, an intermediate period assuring a not too long reaction time (detection of the attack) and at the same time a considerable battery life will be chosen; for this reason, said period usually ranges between 30 and 60 seconds.

If the member has not been removed, the separation between the devices will be less than a threshold distance (within which a device receives the signal emitted by the other device of the animal; this area where the signal emitted by the other device is received is also referred to as action area), and, therefore, the body device will periodically receive (2) the signal emitted by the member device.

Sensitivity of the receiver of the devices will be selected such that the threshold distance beyond which the body device does not receive the signal emitted by the member device, and therefore, emits an attack alarm, has a specific desired value. That threshold distance will be set depending on the size of the animal (the larger the animal the greater the threshold distance), and it is chosen such that it is not too small (since if sensitivity of the receiver is too low, false attack alarms can be generated because the body device does not receive the signal from the member device, without the member having been removed or for taking into account that the size of the animal may change over time since the device can be implanted before the animals reach adulthood), but it cannot be too large either because then when it is detected that the member has been removed (because the member is located at a distance greater than the threshold distance, and the receiver therefore does not receive the signal), the member may already be too far away and the alarm emitted too late for it to be effective. A typical chosen threshold distance is between 2 and 3 meters.

Member device signal emission power can also be selected for the purpose of adjusting this threshold distance parameter, but this power is usually not selected for this purpose alone, but rather for it will be the lowest possible to minimize battery consumption by the device.

If the separation between the devices is greater than the threshold distance (i.e., the member device is outside the action area, indicating that the member has been removed or separated from the body by some accident), the body device will not receive the frame emitted by the member device. When the body device does not receive a signal from the member device a certain time since the last time it received a signal from the member device, the body device activates the alarm process. This certain time can be equal to the sampling period (member device signal emission period), although it is usually a little longer (to prevent false alarms since the arrival of the signal may be slightly delayed for any reason). In different embodiments, this certain time after which the alarm is activated is 1.1 times, 1.5 times and even 2 or 3 times the sampling period.

In one embodiment, when the body device no longer receives the signal from the member device, it sends a signal to said device and activates the alarm when it does not receive a response; this involves greater complexity and higher battery consumption that is usually not desirable. However, it reduces the number of false alarms.

In one embodiment, the body device emits a confirmation signal to the member device when it receives the signal from the member device.

To minimize battery consumption, the body device may not have the remote communication module and positioning module (GPS) continuously activated. In that case, upon activating the alarm process, the device connects the remote communication module and the positioning module. Then once the device has a connection through the wireless network, the device sends an alarm (4) to the control unit (13) by means of a wireless communication network. This wireless communication network (14) can be by mobile telephony (GSM/GPRS, 3G, UMTS, 4G, LTE...), satellite, WiFi, VHF/UHF or any other type of wireless communication network allowing communication at the desired distance (which is usually a few hundred meters or even kilometers). In one embodiment, said network will be a GSM/GPRS network and the alarm signal could emitted be by means of an SMS message or any type of communication allowed in such networks.

This network used for communicating the alarm and location can be an already existing network in the area to avoid the cost of setting up a wireless network only for this application.

Usually, to be able to communicate (to enable communication) through the wireless network, prior to communication the device must establish a handshaking process (3) with the network.

In one embodiment, said alarm signal includes the location of the body device (i.e., the location of the animal). In an alternative embodiment, given that it usually takes a considerable amount of time to obtain the location (for example, to obtain the GPS signal from satellites and estimate the location), to prevent delaying alarm emission the alarm signal does not include the location of the animal (i.e., the alarm signal is emitted before obtaining the location so that the alarm unit is notified as soon as possible and response teams can start getting ready), and the coordinates of the location are sent later.

Once the measurement (5) of the GPS (16) has been taken (and usually after an initial calibration), the animal's position is sent by the body device. The position can be sent to the same central unit as the alarm and from there it is provided to the response teams (15) through direct communication with the teams (6) or by saving the measurement in a server in the Cloud which can be accessed by response teams. For example, information about the position of the body device can be saved in a server allowing it to be viewed in an application that can be accessed from any web browser.

The animal's position can be viewed in a map of the area, for example, and the removed member can even be tracked (using terrestrial antennas) as explained below.

To save time, the body device can send the position directly (for example, through GPRS) to a server in the Cloud which can be accessed by response teams to obtain said position. The alarm signal (and/or the location) can also be sent to a certain specific devices (for example, mobile phones), for example, to the mobile phones of the forest rangers in the area, in addition to the central unit.

The animal's position can be sent from the body device not just once, rather it can continue to be calculated and sent (to the central unit or to the server in the Cloud) several more times or periodically until the battery of the device runs out to obtain a more accurate location and to update the position if the injured animal moves.

Tests have been conducted to get an idea of the time this alarm process takes in practice. Therefore, tests have shown that activating the alarm process (including activating the positioning and remote communication modules) can take between 30 and 45 seconds on average; enabling communication (handshaking) in the case of using a GSM communications network can take about 15 seconds plus 1 second to send the alarm. Obtaining the location in the case of using GPS takes 2 or 3 minutes plus another second to send said location. In total, it would take about 1 minute from the attack until response teams are notified so that they can get going, and about 4 minutes in total to communicate to the teams the exact location of the animal.

As a result, it is clear that compared with the solutions implemented today for detecting poachers, the time between the removal of a rhinoceros horn until the process for hunting down the poachers starts and the animal, if it is still alive, is tended to, is significantly reduced, and the poacher monitoring/tracking area is reduced as the rhinoceros position is known; so it significantly increases the likelihood of capturing the poachers.

The characteristics (dimensions, frequencies) of some prototypes used in different product tests are included below. These characteristics are provided only by way of non-limiting example.

### Member device

- Size: 24 mm X 28 mm, 16 mm X 28 mm, 19 mm x 40 mm
- Radio frequency connection: 2.4 GHz
- Threshold distance to body device: 2 m
- Battery: 1000 mAH, 52 mAH

Body device
- Size: 90 mm X 58 mm X 22 mm
- RF battery: 1000 or 2000 mAH
- GPRS battery: 1000 mAH

Many of the scenarios in which the present invention can be used have no mobile telephony coverage (wild animal parks in Africa usually do not have mobile telephony coverage except in countries such as South Africa). In that case, as indicated, another wireless network such as satellite, WiFi, VHF/UHF can be used for communicating alarms and location of the device. In one embodiment, the device can even have the ability to communicate by means of two different wireless networks and to use one network or the other according to availability, or one of said networks is preferred (because it is more cost effective or reliable, for example), and the other network is used only when the preferred network is not available. For example, it can communicate by means of GSM and VHF/UHF and use the UHF/VHF network when mobile telephony communication is not possible (because there is no coverage).

In addition to the basic operation described above, a functionality that allows locating the removed member can be added to the proposed system. Therefore as indicated, the member device (in the rhinoceros horn, for example) is an active device which can emit a signal periodically at a specific frequency so that the body device can detect its presence. This periodic signal can still be emitted even though the member has been removed (in fact, it will usually emit permanently until the battery of the member device runs out).

If the member device emits the signal as a response to an interrogation signal coming from the body device, when the member device does not receive the interrogation signal from the body device for a certain time (which will indicate that the member has been removed), the member device can be configured to start emitting periodic signals (without having to first receive the interrogation signal from the body device) until its battery runs out.

In both cases, when the member is attached to the animal's body, and even once the member is removed, the member device will periodically emit a signal.

The presence of the member device which is on the move (it is attached to the animal or has been removed) can therefore be detected by means of ground radio beacons which are receiving (and optionally emitting) in the same frequency as the member device. When these beacons detect the signal from a member device of an animal, they report it to a central unit. For higher efficiency, these beacons can be strategically placed both in animal crossing areas (at wild animal crossing points, drinking areas, etc.) and in areas through which poachers escape (roads, park borders, water crossings for vehicles, etc.). This allows detecting the animal throughout its life cycle (close to drinking water areas, for example) and in its possible escape from poachers when the member has been removed.

In other words, by means of using terrestrial antennas (that are sensitive enough to receive the signal emitted by the member device which usually does not have a lot of power) covering the main crossings and areas of interest, the nearby animal crossing (up to 1 km away, for example) can be detected. Since the signal emitted by the device usually includes the animal's identification or the member identification, it allows knowing an estimated location of different animals (at least the places they pass through), and when the member has been removed, the places the poachers having the member pass through can be known so it is easier to capture them.

In one embodiment, when the member device does not receive a signal from the body device (either the confirmation signal or an interrogation signal) for a certain time (which will indicate that the member has been removed), the member device emits signals with a shorter period than the sampling period or with more power than usual to make detection by ground beacons easier.

In future applications, the alarm can be activated in the body device not only due to the absence of signals from the member as described above, but rather due to other causes implying that the animal is under attack, for example, by means of detecting nearby moving metal objects or certain physiological functions of the animal (heart beat, etc..) can be measured and the alarm activated, for example, when said measurements are outside a specific range.

In summary, some of the main advantages of the proposed method and system are:
- The devices will require only that small amount of energy that is needed when an alarm does not have to be activated, so battery life will be maximized. This together with their robustness allows the device to work correctly without needing external intervention for a very long time (even years).
- The device will be discrete and implanted inside the animal with minimum external visual impact (in most cases, it will not be visible from outside). Furthermore, it will be implanted with sufficient stability and deep enough to prevent it from falling out by accident or from being easily removed.
- The alarm will be activated in a very short time after the attack on the animal.
- The devices are small enough to be able to use them in any animal, even in small animals.
- For communicating the alarms, already existing networks can be used to avoid the cost of setting up a wireless network only for this application.

In this text, the term "comprises" and derivations thereof (such as "comprising", etc.) must not be construed in an exclusive manner, i.e., these terms must not be interpreted as excluding the possibility that what is described and defined can include more elements, steps, etc.

Some preferred embodiments of the invention are described in the dependent claims included below.

Although many embodiments of the present invention refer to wild animals such as rhinoceros or elephants and to members (body parts of the animals) such as rhinoceros horns and elephant tusks, the present invention is applicable to other types of animals (such as lions, gorillas...) and members. Generally, it is applicable to any type of moving object which is to be monitored in order to detect the removal of any member or part thereof.

Having sufficiently described the nature of the invention as well as the manner of carrying it out to practice, the possibility that the different parts thereof could be manufactured from a variety of materials and in a variety of shapes and sizes must be stated. Those variations recommended by practice can also be introduced in the constitution or method provided that they do not alter the fundamental principle of the present invention.

The description and drawings simply illustrate the principles of the invention. It must therefore be noted that persons skilled in the art could conceive several arrangements which, though not explicitly described or shown in this document, represent the principles of the invention and are included within its scope. Furthermore, all the examples described in this document are provided mainly for pedagogic purposes in order to aid the reader to understand the principles of the invention and the concepts provided by the inventor/s to improve the art, and they must be considered as non-limiting with respect to such specifically described examples and conditions. Furthermore, all that is described in this document relating to the principles, aspects and embodiments of the invention, as well as the specific examples thereof, cover equivalents thereof.

Although the present invention has been described with reference to specific embodiments, persons skilled in the art must understand that the foregoing and various other changes, omissions and additions in the form and detail thereof can be made without departing from the scope of the invention as defined by means of the following claims.

## Claims

1. Method for monitoring and detecting attacks on animals, wherein the method comprises the following steps:
- determining the existence of an alarm situation in an animal using a first electronic device (12) implanted in the animal's body;
- when the existence of an alarm situation is determined, performing the following steps using the first electronic device:
- sending an alarm message to an alarm unit (13) external to the animal through a wireless communication network;
- obtaining the location of the first device (12); and
- sending a message including said location through the wireless communication network;
wherein the step of determining the existence of an alarm situation in the animal includes:
- determining the existence of an alarm situation when the first electronic device (12) does not receive a radio frequency signal from a second electronic device (11) implanted in a body part of the animal, for a time period greater than a specific time threshold.

2. Method according to claim 1, wherein the second electronic device (11) periodically emits a radio frequency signal.

3. Method according to claim 1, wherein the second electronic device (11) emits a radio frequency signal as a response to a periodic signal received from the first device (12).

4. Method according to any of the preceding claims 1 to 3 which further includes:
- a radio frequency beacon receiving the signal emitted by the second device (11); and
- the radio frequency beacon sending a message informing that the signal has been received from the device (11), including the identification of the device the signal of which has been received;
- estimating the location of the second device (11) using the information sent by the beacon and the position of said beacon.

5. Method according to any of the preceding claims 1-4 which further includes:
- the second device (11) increasing the periodicity and/or power of the signals it emits when said second device (11) does not receive any signal from the first device for a certain time interval.

6. Method according to any of the preceding claims, wherein a positioning module in the first device (12) used by the first device (12) for obtaining location and a communications module in the first device (12) used by the first device (12) for communicating through the wireless communication network are deactivated when the existence of an alarm situation has not been determined and when the existence of an alarm situation is determined, the method includes the following steps prior to the steps of sending an alarm message and obtaining the location:
- activating the positioning module in the first electronic device (12);
- activating the communications module in the first electronic device (12);
- enabling communications through the wireless communications network by means of the communications module.

7. Method according to any of the preceding claims which further includes:
- receiving said alarm message in the alarm unit (13);
- upon receiving said alarm message, sending an alarm message to a response team (15).

8. Method according to claim 1, wherein the first device (12) determines the existence of an alarm situation in the animal when it detects nearby moving metal objects or when certain physiological functions of the animal it monitors are outside a specific range of values.

9. System for monitoring and detecting attacks on animals, wherein the system comprises:
- a first electronic device (12) implanted in the animal's body;
- a second electronic device (11) implanted in a body part of the animal removal of which is to be detected, comprising a radio frequency module configured for sending radio frequency signals to the first electronic device (12);
- where the first electronic device (12) comprises:
- a radio frequency module configured for receiving radio frequency signals from the second electronic device;
- a first communications module (26) configured for communicating the first electronic device with at least one alarm unit (13) external to the animal, through a first wireless communications network;
- a positioning module (25) configured for obtaining the location of the first electronic device (12);
- a processor configured for determining the existence of an alarm situation when the first electronic device (12) does not receive a radio frequency signal from the second electronic device (11) for a time period greater than a specific time threshold and, when the existence of an alarm situation is determined, for performing the following steps:
- sending an alarm message to the alarm unit (13) through the first wireless communication network by means of the first communications module (26);
- obtaining the location of the device (12) by means of the positioning module (25);
- sending a message including said location through the first wireless communication network by means of the first communications module (26).

10. System according to claim 9, wherein said positioning module (25) and said first communications module (26) are deactivated when the existence of an alarm situation has not been determined, and wherein the processor is additionally configured for activating said modules when the existence of an alarm situation is determined.

11. System according to any of the preceding claims 9-10, wherein the first device (12) has a second communications module configured for communicating the first electronic device (12) with at least the alarm unit through a second wireless communications networks, and wherein the processor is additionally configured for activating and using this second communications module if the first communications module (26) informs the processor that it cannot communicate through the first wireless network.

12. System according to any of the preceding claims 9-11, wherein the positioning module (25) uses a GPS positioning system.

13. System according to any of the preceding claims 9-12, wherein the first wireless communication network is at least one of the following: a GSM/GPRS network, a GSM network, a UHF/VHF network, a 3G mobile telephony network, a 4G mobile telephony network, an LTE mobile telephony network, a satellite communications network or a WiFi network.

14. Computer program comprising instructions that can be run by a computer to implement the method according to any of claims 1-8 when run in a computer, a digital signal processor, an application-specific integrated circuit, a microprocessor, a microcontroller or any other form of programmable hardware.

## Patentansprüche

1. Verfahren zum Überwachen und Erfassen von Angriffen auf Tiere, welches Verfahren die folgenden Schritte enthält:
- Feststellen des Vorhandenseins einer Alarmsituation in einem Tier unter Verwendung einer in dem Tierkörper implantierten ersten elektronischen Vorrichtung (12);
- Durchführen der folgenden Schritte unter Verwendung der ersten elektronischen Vorrichtung, wenn das Vorhandensein einer Alarmsituation festgestellt wurde:
- Senden eine Alarmmitteilung an eine Alarmeinheit (13) außerhalb des Tieres über ein drahtloses Kommunikationsnetz;
- Erhalten der Position der ersten Vorrichtung (12); und
- Senden einer diese Position enthaltenden Mitteilung über das drahtlose Kommunikationsnetz;
wobei der Schritt des Feststellens des Vorhandenseins einer Alarmsituation in dem Tier enthält:
- Feststellen des Vorhandenseins einer Alarmsituation, wenn die erste elektronische Vorrichtung (12) von einer zweiten elektronischen Vorrichtung (11), die in einem Körperteil des Tieres implantiert ist, über eine Zeitperiode, die größer als ein festgelegter Zeit-Schwellenwert ist, kein Hochfrequenzsignal empfängt.

2. Verfahren nach Anspruch 1, wobei die zweite elektronische Vorrichtung (11) periodisch ein Hochfrequenzsignal sendet.

3. Verfahren nach Anspruch 1, wobei die zweite elektronische Vorrichtung (11) ein Hochfrequenzsignal als Reaktion auf ein von der ersten Vorrichtung (12) empfangenes periodisches Signal sendet.

4. Verfahren nach einem der vorhergehenden Ansprüche 1 bis 3, welches ferner enthält:
- eine Hochfrequenz-Bake, die das von der zweiten Vorrichtung (11) gesendete Signal empfängt; und
- wobei die Hochfrequenz-Bake eine Mitteilung sendet, die mitteilt, dass das Signal von der Vorrichtung (11) empfangen wurde, einschließlich der Identifizierung der Vorrichtung, deren Signal empfangen wurde;
- Schätzen der Position der zweiten Vorrichtung (11) unter Verwendung der von der Bake gesendeten Informationen und der Position der Bake.

5. Verfahren nach einem der vorhergehenden Ansprüche 1-4, welches ferner enthält:
- Erhöhen der Periodizität und/oder Leistung der durch die zweite Vorrichtung (11) gesendeten Signale, wenn die zweite Vorrichtung (11) über ein bestimmtes Zeitintervall kein Signal von der ersten Vorrichtung empfängt.

6. Verfahren nach einem der vorhergehenden Ansprüche, wobei ein Positionierungsmodul in der ersten Vorrichtung (12), das von der ersten Vorrichtung (12) zum Erhalten einer Position verwendet wird, und ein Kommunikationsmodul in der ersten Vorrichtung (12), das von der ersten Vorrichtung (12) für die Kommunikation über das drahtlose Kommunikationsnetz verwendet wird, deaktiviert werden, wenn kein Vorhandensein einer Alarmsituation festgestellt wurde, wobei das Verfahren die folgenden Schritte vor den Schritten des Sendens einer Alarmmitteilung und des Erhaltens der Position enthält:
- Aktivieren des Positionierungsmoduls in der ersten elektronischen Vorrichtung (12);
- Aktivieren des Kommunikationsmoduls in der ersten elektronischen Vorrichtung (12);
- Ermöglichen der Kommunikation über das drahtlose Kommunikationsnetz mittels des Kommunikationsmoduls.

7. Verfahren nach einem der vorhergehenden Ansprüche, welches ferner enthält:
- Empfangen der Alarmmitteilung in der Alarmeinheit (13) ;
- Senden eine Alarmmitteilung an eine Eingreifgruppe (15).

8. Verfahren nach Anspruch 1, wobei die erste Vorrichtung (12) das Vorhandensein einer Alarmsituation in dem Tier feststellt, wenn sie sich in der Nähe bewegende Metallgegenstände erfasst oder wenn bestimmte physiologische Funktionen des Tieres, die sie überwacht, außerhalb eines festgelegten Wertebereichs liegen.

9. System zum Überwachen und Erfassen von Angriffen auf Tiere, wobei das System enthält:
- eine erste elektronische Vorrichtung (12), die in dem Tierkörper implantiert ist;
- eine zweite elektronische Vorrichtung (11), die in einem Körperteil des Tieres implantiert ist, dessen Entfernen erfasst werden soll, enthaltend ein Hochfrequenzmodul, das dafür konfiguriert ist, Hochfrequenzsignale an die erste elektronische Vorrichtung (12) zu senden;
- wobei die erste elektronische Vorrichtung (12) enthält:
- ein Hochfrequenzmodul, das dafür konfiguriert ist, Hochfrequenzsignale von der zweiten elektronischen Vorrichtung zu empfangen;
- ein erstes Kommunikationsmodul (26), das zur Kommunikation der ersten elektronischen Vorrichtung mit mindestens einer Alarmeinheit (13) außerhalb des Tieres durch ein erstes drahtloses Kommunikationsnetz konfiguriert ist;
- ein Positionierungsmodul (25), das dafür konfiguriert ist, die Position der ersten elektronischen Vorrichtung (12) zu erhalten;
- einen Prozessor, der dafür konfiguriert ist, das Vorhandensein einer Alarmsituation festzustellen, wenn die erste elektronische Vorrichtung (12) über eine Zeitperiode, die größer als ein festgelegter Zeit-Schwellenwert ist, von der zweiten elektronischen Vorrichtung (11) kein Hochfrequenzsignal empfängt, und dann, wenn das Vorhandensein einer Alarmsituation festgestellt ist, die folgenden Schritte durchzuführen:
- Senden einer Alarmmitteilung an die Alarmeinheit (13) über das erste drahtlose Kommunikationsnetz mittels des ersten Kommunikationsmoduls (26);
- Erhalten der Position der Vorrichtung (12) mittels des Positionierungsmoduls (20);
- Senden einer Mitteilung, die die Position enthält, über das erste drahtlose Kommunikationsnetz mittels des ersten Kommunikationsmoduls (26).

10. System nach Anspruch 9, wobei das Positionierungsmodul (25) und das erste Kommunikationsmodul (26) deaktiviert werden, wenn kein Vorhandensein einer Alarmsituation festgestellt wurde, und wobei der Prozessor zusätzlich dafür konfiguriert ist, die Module zu aktivieren, wenn das Vorhandensein einer Alarmsituation festgestellt wird.

11. System nach einem der vorhergehenden Ansprüche 9-10, wobei die erste Vorrichtung (12) ein zweites Kommunikationsmodul hat, das zur Kommunikation der ersten elektronischen Vorrichtung (12) mindestens mit der Alarmeinheit über ein zweites drahtloses Kommunikationsnetz konfiguriert ist, und wobei der Prozessor zusätzlich dafür konfiguriert ist, dieses zweite Kommunikationsmodul zu aktivieren und zu verwenden, wenn das erste Kommunikationsmodul (26) den Prozessor darüber informiert, dass es nicht über das erste drahtlose Netz kommunizieren kann.

12. System nach einem der vorhergehenden Ansprüche 9-11, wobei das Positionierungsmodul (25) ein GPS-Positionierungssystem verwendet.

13. System nach einem der vorhergehenden Ansprüche 9-12, wobei das erste drahtlose Kommunikationsnetz mindestens eines der folgenden ist: ein GSM/GPRS-Netz, ein GSM-Netz, ein UHF/VHF-Netz, ein 3G-Mobiltelefonnetz, ein 4G-Mobiltelefonnetz, ein LTE-Mobiltelefonnetz, ein Satellitenkommunikationsnetz oder ein WLAN-Netz.

14. Computerprogramm, enthaltend Instruktionen, die von einem Computer ausgeführt werden können, um das Verfahren nach einem der Ansprüche 1-8 auszuführen, wenn sie in einem Computer, einem digitalen Signalprozessor, einer anwendungsspezifischen integrierten Schaltung, einem Mikroprozessor, einem Mikrocontroller oder einer beliebigen anderen Form von programmierbarer Hardware ausgeführt werden.

## Revendications

1. Procédé de surveillance et de détection d'attaques sur des animaux, dans lequel le procédé comprend les étapes suivantes :
- la détermination de l'existence d'une situation d'alarme chez un animal à l'aide d'un premier dispositif électronique (12) implanté dans le corps de l'animal ;
- quand l'existence d'une situation d'alarme est déterminée, la réalisation des étapes suivantes à l'aide du premier dispositif électronique :
- l'envoi d'un message d'alarme à une unité d'alarme (13) extérieure à l'animal par le biais d'un réseau de communication sans fil ;
- l'obtention de l'emplacement du premier dispositif (12) ; et
- l'envoi d'un message incluant ledit emplacement par le biais du réseau de communication sans fil ;
dans lequel l'étape de détermination de l'existence d'une situation d'alarme chez l'animal inclut :
- la détermination de l'existence d'une situation d'alarme quand le premier dispositif électronique (12) ne reçoit pas de signal de fréquence radio en provenance d'un second dispositif électronique (11) implanté dans une partie du corps de l'animal, pendant une période supérieure à un seuil de temps spécifique.

2. Procédé selon la revendication 1, dans lequel le second dispositif électronique (11) émet périodiquement un signal de fréquence radio.

3. Procédé selon la revendication 1, dans lequel le second dispositif électronique (11) émet un signal de fréquence radio comme réponse à un signal périodique reçu en provenance du premier dispositif (12).

4. Procédé selon l'une quelconque des revendications 1 à 3 qui inclut en outre :
- une balise de fréquence radio recevant le signal émis par le second dispositif (11); et
- la balise de fréquence radio envoyant un message informant que le signal a été reçu en provenance du dispositif (11), incluant l'identification du dispositif dont le signal a été reçu ;
- l'estimation de l'emplacement du second dispositif (11) à l'aide des informations envoyées par la balise et de la position de ladite balise.

5. Procédé selon l'une quelconque des revendications 1-4 qui inclut en outre :
- le second dispositif (11) augmentant la périodicité et/ou la puissance des signaux qu'il émet quand ledit second dispositif (11) ne reçoit pas de signal en provenance du premier dispositif pendant un certain intervalle de temps.

6. Procédé selon l'une quelconque des revendications précédentes, dans lequel un module de positionnement dans le premier dispositif (12) utilisé par le premier dispositif (12) pour obtenir l'emplacement et un module de communication dans le premier dispositif (12) utilisé par le premier dispositif (12) pour communiquer par le biais du réseau de communication sans fil sont désactivés quand l'existence d'une situation d'alarme n'a pas été déterminée et quand l'existence d'une situation d'alarme est déterminée, le procédé inclut les étapes suivantes avant les étapes d'envoi d'un message d'alarme et d'obtention de l'emplacement :
- l'activation du module de positionnement dans le premier dispositif électronique (12) ;
- l'activation du module de communication dans le premier dispositif électronique (12) ;
- la permission de communications par le biais du réseau de communication sans fil à l'aide du module de communication.

7. Procédé selon l'une quelconque des revendications précédentes qui inclut en outre :
- la réception dudit message d'alarme dans l'unité d'alarme (13) ;
- à réception dudit message d'alarme, l'envoi d'un message d'alarme à une équipe de réponse (15).

8. Procédé selon la revendication 1, dans lequel le premier dispositif (12) détermine l'existence d'une situation d'alarme chez un animal quand il détecte des objets métalliques mobiles voisins ou quand certaines fonctions physiologiques de l'animal qu'il surveille se trouvent à l'extérieur d'une plage de valeurs spécifique.

9. Système de surveillance et de détection d'attaques sur des animaux, dans lequel le système comprend :
- un premier dispositif électronique (12) implanté dans le corps d'un animal ;
- un second dispositif électronique (11) implanté dans une partie du corps de l'animal dont le retrait doit être détecté, comprenant un module de fréquence radio configuré pour envoyer des signaux de fréquence radio au premier dispositif électronique (12) ;
- où le premier dispositif électronique (12) comprend :
- un module de fréquence radio configuré pour recevoir des signaux de fréquence radio en provenance du second dispositif électronique ;
- un premier module de communication (26) configuré pour faire communiquer le premier dispositif électronique avec au moins une unité d'alarme (13) extérieure à l'animal, par le biais d'un premier réseau de communication sans fil ;
- un module de positionnement (25) configuré pour obtenir l'emplacement du premier dispositif électronique (12) ;
- un processeur configuré pour déterminer l'existence d'une situation d'alarme quand le premier dispositif électronique (12) ne reçoit pas de signal de fréquence radio provenant du second dispositif électronique (11) pendant une période supérieure à un seuil de temps spécifique et, quand l'existence d'une situation d'alarme est déterminée, pour effectuer les étapes suivantes :
- l'envoi d'un message d'alarme à l'unité d'alarme (13) par le biais du premier réseau de communication sans fil à l'aide du premier module de communication (26) ;
- l'obtention de l'emplacement du dispositif (12) à l'aide du module de positionnement (25) ;
- l'envoi d'un message incluant ledit emplacement par le biais du premier réseau de communication sans fil à l'aide du premier module de communication (26).

10. Système selon la revendication 9, dans lequel ledit module de positionnement (25) et ledit premier module de communication (26) sont désactivés quand l'existence d'une situation d'alarme n'a pas été déterminée, et dans lequel le processeur est en plus configuré pour activer lesdits modules quand l'existence d'une situation d'alarme est déterminée.

11. Système selon l'une quelconque des revendications précédentes 9-10, dans lequel le premier dispositif (12) comporte un second module de communication configuré pour faire communiquer le premier dispositif électronique (12) avec au moins l'unité d'alarme par le biais d'un second réseau de communication sans fil, et dans lequel le processeur est en plus configuré pour activer et utiliser ce second module de communication si le premier module de communication (26) informe le processeur qu'il ne peut pas communiquer par le biais du premier réseau sans fil.

12. Système selon l'une quelconque des revendications précédentes 9-11, dans lequel le module de positionnement (25) utilise un système de positionnement GPS.

13. Système selon l'une quelconque des revendications précédentes 9-12, dans lequel le premier réseau de communication sans fil est au moins l'un parmi les suivants : un réseau GSM/GPRS, un réseau GSM, un réseau UHF/VHF, un réseau de téléphonie mobile 3G, un réseau de téléphonie mobile 4G, un réseau de téléphonie mobile LTE, un réseau de communication par satellite ou un réseau WiFi.

14. Programme informatique comprenant des instructions qui peuvent être exécutées par un ordinateur pour mettre en oeuvre le procédé selon l'une quelconque des revendications 1-8 quand il est exécuté sur un ordinateur, un processeur de signal numérique, un circuit intégré spécifique à l'application, un microprocesseur, un micro-dispositif de commande ou toute autre forme de matériel programmable.
